# EUROPÄISCHE PATENTSCHRIFT

(11) **EP 2 372 016 B1**
(45) Veröffentlichungstag und Bekanntmachung des Hinweises auf die Patenterteilung: **09.11.2016**
(21) Anmeldenummer: 11005176.0
(22) Anmeldetag: 25.06.2009
(51) Int. Cl.: D06F 95/00, B65G 47/51, B65G 47/61

(54) **Verfahren und Vorrichtung zum Transport von Wäschestücken**
Method and device for transporting laundry items
Procédé et dispositif de transport de pièces de linge

(30) Priorität: 26.06.2008 DE 102008029930
(43) Veröffentlichungstag der Anmeldung: 05.10.2011
(62) Teilanmeldung aus: 09008320.5
(73) Patentinhaber: Herbert Kannegiesser GmbH, 32602 Vlotho (DE)
(72) Erfinder: Evans, Oliver, Kendal, Cumbria, LA9 6DX (GB); Littmann, Dirk, 32108 Bad Salzuflen (DE); Heinz, Engelbert, 32602 Vlotho (DE)
(74) Vertreter: Möller, Friedrich

(56) Entgegenhaltungen:
- EP-A- 1 911 699
- DE-A1- 3 840 521
- DE-A1-102005 006 067
- DE-A1-102006 055 494
- DE-U1- 9 105 496
- GB-A- 2 424 424

## Beschreibung

Die Erfindung betrifft ein Verfahren zum Transport von Wäschestücken, insbesondere mehrere in Wäschebehältern oder Stapeln befindliche Wäschestücke, gemäß dem Oberbegriff des Anspruchs 1. Des Weiteren betrifft die Erfindung eine Vorrichtung zum Transport von Wäschestücken, insbesondere mehrere in Wäschebehältern oder Stapeln befindliche Wäschestücke, gemäß dem Oberbegriff des Anspruchs 3.

In Wäschereien werden Wäschestücke häufig weitertransportiert. Bei den Wäschestücken kann es sich um Schmutzwäsche, reine Wäsche oder auch teilbehandelte Wäsche handeln. Die Wäschestücke werden entweder einzeln, in Wäschebehältern oder in Stapeln weitertransportiert. In Wäschebehältern, wobei es sich um Wäschesäcke, Wäschecontainer oder dergleichen handeln kann, wird üblicherweise eine Mehrzahl schmutziger Wäschestücke weitertransportiert. Zwischen den Behandlungsstufen werden die Wäschestücke einzeln weitertransportiert. Die fertig behandelten (sauberen) Wäschestücke hingegen werden häufig in Stapeln gefalteter Wäschestücke weitertransportiert. Die Erfindung bezieht sich auf den Weitertransport sämtlicher Wäschestücke, und zwar einzelner Wäschestücke, eine Vielzahl sich in Wäschebehältern befindende Wäschestücke und Stapel gefalteter Wäschestücke. Wenn im Folgenden nur von Wäschestücken die Rede ist, betrifft das den Weitertransport einzelner Wäschestücke, sich in Wäschebehältern befindliche Wäschestücke und gestapelte Wäschestücke.

Der Weitertransport von Wäschestücken in Wäschereien erfolgt üblicherweise entlang eines Schienensystems aus mehreren Schienen, die sowohl nebeneinander als auch hintereinander angeordnet sein können. Entlang des Schienensystems werden die Wäschestücke dorthin "rangiert", wo sie behandelt werden oder die Wäscherei verlassen sollen. Häufig findet im Verlauf des Schienensystems eine Sortierung und/oder Speicherung der Wäschestücke statt. Zum "Rangieren" der Wäschestücke auf die entsprechende Schiene des Schienensystems ist es bei bekannten Vorrichtungen üblich, Weichen vorzusehen. Diese sind aufwendig und störanfällig. Außerdem sind bei komplexeren Schienensystemen mit einer größeren Anzahl von Schienen viele Weichen erforderlich.

DE 38 40 521 A1 offenbart beispielsweise eine Hängebahn für den Wäschetransport mit schwerkraftgetriebenen auf gegen die Horizontale geneigten auf Transportschienen laufenden Transportwagen. DE 10 2006 055 494 A1 offenbart eine Vorrichtung zum Transport von Wäschestücken, wobei einem oder mehreren Förderern eine Hubeinrichtung zugeordnet ist, womit jeweils ein Förderer auf- und abfahrbar ist.

Ausgehend vom Vorstehenden liegt der Erfindung die Aufgabe zugrunde, ein Verfahren und eine Vorrichtung zum Transport von Wäschestücken zu schaffen, womit ein einfaches und zuverlässiges gezielt gesteuertes Verfahren der Wäschestücke gewährleistet ist.

Ein Verfahren zur Lösung der genannten Aufgabe weist die Maßnahmen des Anspruchs 1 auf. Dieses Verfahren sieht es vor, dass die Wäschestücke längs mindestens einer geneigt verlaufenden Schiene im Kreislauf durch Schwerkraft transportiert werden, wobei die Wäschestücke mittels mindestens einer Hubeinrichtung von einem tieferen Ende des Kreislaufs zu einem höheren Anfang des Kreislaufs angehoben werden. Das Verfahren ermöglicht einen Kreislauf der Wäschestücke durch Schwerkraftförderung, indem am Ende eines jeden Kreislaufs die Hubeinrichtung die Wäschestücke wieder anhebt und ihr dadurch die benötigte potentielle Energie zum erneuten Durchlauf des Kreislaufs zur Verfügung stellt. Dadurch ist es möglich, dass die Wäschestücke mehrfach im Kreislauf transportiert werden, bis sie aus dem Kreislauf ausgeschleust werden. So ist eine bedarfsgerechte Versorgung von beliebigen Wäschereimaschinen mit Wäschestücken möglich. Insbesondere sind die Wäschestücke bedarfsgerecht einer jeweiligen Wäschereimaschine oder einer sonstigen Stelle der Wäscherei zuführbar. Es erübrigen sich auch verschiedene Antriebe zur Weiterbewegung der Wäschestücke. Die Wäschestücke werden vielmehr durch die beim Anheben durch die Hubeinrichtung erhaltene potentielle Energie selbsttätig längs der abwärtsgeneigten Schiene oder auch mehrerer leicht abwärts geneigter, verzweigter Schienen eines Schienensystems weiterbewegt. Bei Bedarf können die Wäschestücke von der Hubeinrichtung auch auf ein niedrigeres Niveau abgesenkt werden.

Nach dem erfindungsgemäßen Verfahren ist es vorgesehen, dass die Wäschestücke von der jeweiligen Hubeinrichtung umorientiert werden. Dieses Umorientieren geschieht derart, dass die Wäschestücke in einer von der Zulaufrichtung abweichenden Richtung die Hubeinrichtung verlassen bzw. in eine bestimmte Schiene einlaufen. Dadurch kann eine Hubeinrichtung gleichzeitig die Funktion mehrerer Weichen wahrnehmen. Das Umorientieren der Wäschestücke von der Hubeinrichtung ermöglicht es - im Gegensatz zur Weiche - Wäschestücke an mehr als zwei unterschiedliche Stellen zu leiten. Die erfindungsgemäße Hubeinrichtung stellt somit eine Hub- und Umorientierungseinrichtung mit mehreren Aufgaben dar.

Die Wäschestücke werden durch Drehen um eine vertikale Achse umorientiert. Alternativ kann die Drehung auch um eine leicht zur Vertikalen geneigte Achse erfolgen. In jedem Fall übernimmt die Hubeinrichtung zusätzlich zur Hubfunktion die Funktion einer Drehscheibe, die die Möglichkeit bietet, die Wäschestücke wahlweise an verschiedene Schienen, insbesondere mehr als zwei Schienen, zu überführen.

Gemäß einer weiteren Ausgestaltung des Verfahrens ist vorgesehen, dass von der Hubeinrichtung die Wäschestücke umorientiert werden vom tieferen Ende des Kreislaufs zum in der Richtung von diesem abweichenden höheren Ende des Kreislaufs. Alternativ oder zusätzlich können die Wäschestücke von der Hubeinrichtung auch aus dem Kreislauf ausgeschleust werden, und zwar vorzugsweise auch auf beliebigen Höhenniveaus.

Eine bevorzugte Weiterbildung des Verfahrens sieht es vor, die Wäschestücke durch Schwerkraft in die Hubeinrichtung einzufahren und nach dem Anheben durch Schwerkraft aus der Einrichtung auszufahren. Dadurch braucht die Hubeinrichtung keine Antriebe aufzuweisen, um die Wäschestücke vom tieferliegenden Ende einer Schiene zu übernehmen und sie auf das höherliegende Ende der Schiene zu überführen. Dieses geschieht vielmehr selbsttätig durch Schwerkraft genauso, wie die Wäschestücke in der Schiene durch Schwerkraft verfahren werden.

Es ist des Weiteren auch vorgesehen, dass die Wäschestücke von der Hubeinrichtung verfahren werden. Die Hubeinrichtung dient dann nicht nur zum Anheben bzw. Absenken und Drehen der Wäschestücke, sondern auch zum Verfahren zum Anfang einer entfernten Schiene.

Eine Vorrichtung zur Lösung dieser eingangs genannten Aufgabe weist die Merkmale des Anspruchs 3 auf. Demnach ist die Hubeinrichtung nicht nur zum Auf- und Abbewegen der Wäschestücke, sondern auch zum Drehen derselben ausgebildet. Bei einer solchen Vorrichtung können die Wäschestücke angehoben und an verschiedene Schienen eines mehrere Schienen aufweisenden Schienensystems übergeben werden. Die Hubeinrichtung bildet dabei sozusagen einen "Knotenpunkt", der Weichen überflüssig macht oder zumindest mehrere Weichen ersetzt.

Bevorzugt sind die Enden eines Schienenkreislaufs in unterschiedlichen Höhen an die gleiche Hubeinrichtung herangeführt. Dann dient die Hubeinrichtung dazu, die Wäschestücke, die am Ende des Schienenkreislaufs angekommen sind, anzuheben und erneut an den Anfang des Schienenkreislaufs zu übergeben, wobei durch Drehen der Wäschestücke eine Umorientierung stattfinden kann zu einem gegebenenfalls in einer anderen Richtung von der Hubeinrichtung abzweigendes Ende des Schienenkreislaufs. Dadurch können die Wäschestücke den Schienenkreislauf nach dem Prinzip einer Schwerkraftförderung durchlaufen, ohne dass der Schienenkreislauf eigene Antriebe aufweisen muss. Die potentielle Energie, die erforderlich ist, damit die Wäschestücke mehrfach den Schienenkreislauf durchlaufen können, erhalten sie durch das jeweilige Anheben durch die Hubeinrichtung.

Die erfindungsgemäße Vorrichtung verfügt über ein Schienensystem aus mehreren nebeneinander angeordneten Schienen, wobei vorzugsweise die Enden aller der gleichen Hubeinrichtung zugeordneten Schienen in einem gleichen Abstand zu einer Drehachse angeordnet sind, um die die Wäschestücke von der Hubeinrichtung drehbar sind. Dadurch können die Wäschestücke von der Hubeinrichtung nach Art einer Drehscheibe an verschiedene, ausgewählte Schienen überführt oder von verschiedenen Schienen übernommen werden.

Bei einer Hubeinrichtung, die ein Tragmittel mit einem um die Drehachse drehbaren Schienenabschnitt aufweist, schneidet die Drehachse den Schienenabschnitt etwa auf seiner halben Länge. Die Drehachse bildet so quasi den Mittelpunkt des Schienenabschnitts, um den gegenüberliegende Enden des Schienenabschnitts auf einer Kreisbahn, mindestens einer Teilkreisbahn, drehbar sind.

Eine bevorzugte Ausgestaltung der Vorrichtung sieht es vor, dass eine vorzugsweise einzige Hubeinrichtung den gegenüberliegenden Enden mindestens einer Schiene eines Schienenkreislaufs zugeordnet ist. Die von der Hubeinrichtung an den Anfang des Schienenkreislaufs überführten Wäschestücke können dann am Ende des Schienenkreislaufs wieder zur Hubeinrichtung zurückgelangen, um von dieser erneut in den Schienenkreislauf eingeschleust zu werden. Die Wäschestücke können dann durch mehrfaches Durchlaufen des Schienenkreislaufs Warteschleifen ausführen, bis sie aus dem Schienenkreislauf ausgeschleust werden. So ist es beispielsweise möglich, unterschiedliche Wäschestücke oder Wäschebehälter mit unterschiedlichen Wäschestücken durch mehrmaliges Durchlaufen des Schienenkreislaufs zu sortieren, indem bei einem Umlauf oder auch mehreren Umläufen alle Wäschestücke, die das gleiche Sortierkriterium erfüllen, ausgeschleust werden und danach die Ausschleusung aller Wäschestücke mit einem anderen Sortierkriterium erfolgt.

Bei einer bevorzugten Ausgestaltung der Hubeinrichtung ist der Schienenabschnitt am freien Ende des Tragarms in seiner Neigung gegenüber vorzugsweise der Horizontalen veränderbar. Dadurch kann der Schienenabschnitt zur Schiene hin geneigt werden, woran das Wäschestück oder der Wäschebehälter überführt werden sollen. Infolge der Neigung des Schienenabschnitts zur Schiene kann der mindestens eine Laufwagen mit dem daran hängenden Wäschestück oder Wäschebehälter ohne einen Antrieb der Schwerkraft folgend in die Schiene einlaufen und sich auf der vorzugsweise ebenfalls geneigten Schiene weiterbewegen. Umgekehrt kann die Neigung des Schienenabschnitts so eingestellt werden, dass dieser von einem zur Schiene weisenden Ende abwärtsgerichtet verläuft und dadurch der mindestens eine Laufwagen mit dem daran hängenden Wäschestück oder Wäschebehälter der Schwerkraft folgend auf dem Schienenabschnitt entlanglaufen kann. Es ist aber auch denkbar, den Schienenabschnitt zum Einlaufen mindestens eines Laufwagens horizontal auszurichten, wenn die Geschwindigkeit des mindestens einen Laufwagens vor dem Schienenabschnitt ausreicht.
- Fig. 1: eine schematische Draufsicht auf ein erstes Ausführungsbeispiel einer erfindungsgemäßen Vorrichtung,
- Fig. 2: eine schematische Draufsicht auf ein zweites Ausführungsbeispiel einer Vorrichtung,
- Fig. 3: eine schematische Draufsicht auf ein drittes Ausführungsbeispiel einer Vorrichtung,
- Fig. 4: eine Draufsicht auf ein viertes Ausführungsbeispiel einer Vorrichtung,
- Fig. 5: eine Seitenansicht eines Teils der Vorrichtung der Fig. 4,
- Fig. 6: eine Seitenansicht eines alternativen Ausführungsbeispiels des Teils der Vorrichtung der Fig. 5,
- Fig. 7: eine Seitenansicht eines anderen alternativen Ausführungsbeispiels der Vorrichtung, und
- Fig. 8: eine Seitenansicht eines weiteren alternativen Ausführungsbeispiels der Vorrichtung.

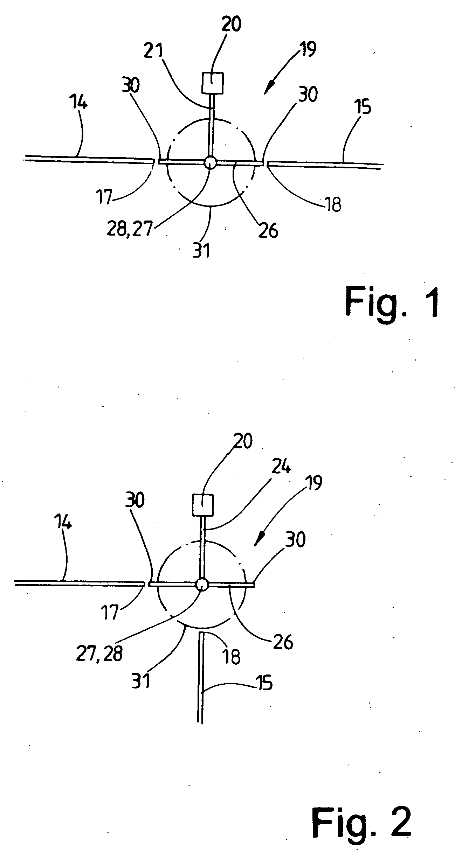

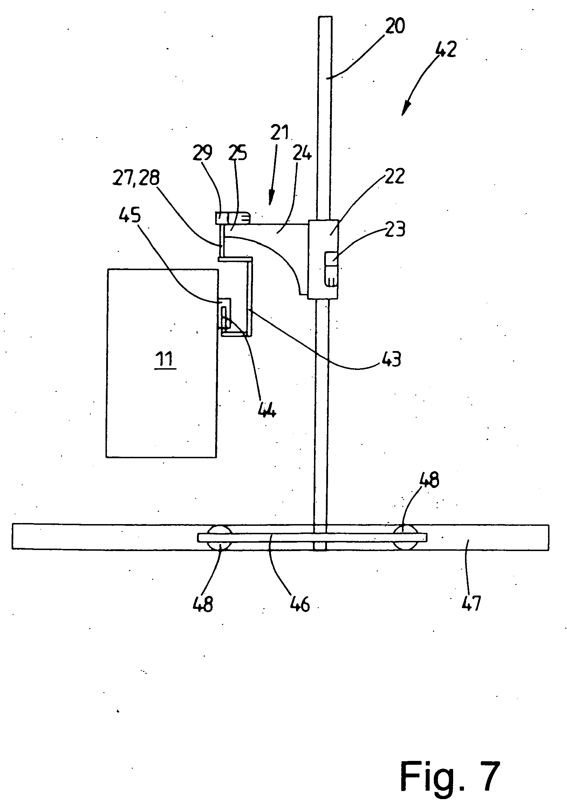

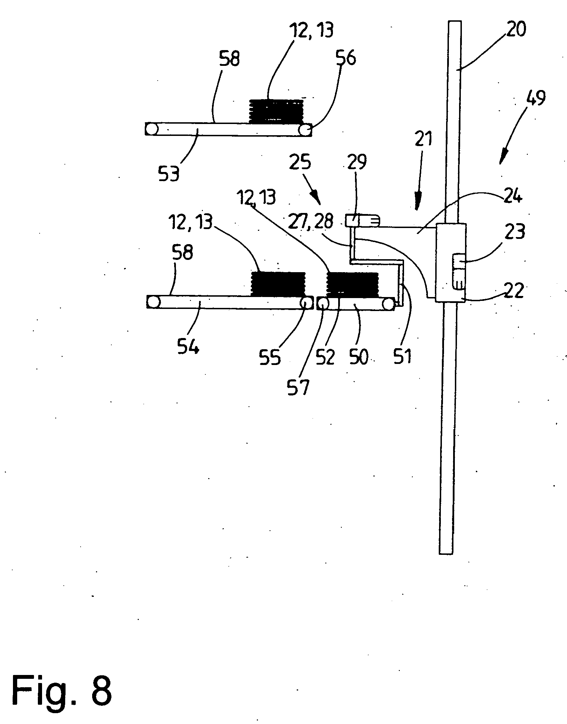

Die hier gezeigten Vorrichtungen dienen zum Transport mehrerer oder auch einzelner Wäschestücke 13 in Wäschereien. Bei den Ausführungsbeispielen der Fig. 1 bis 6 dient die Vorrichtung zum Transport mehrerer sich in einem Wäschesack 10 befindenden Wäschestücke 13, die einer gleichen Behandlung unterzogen werden sollen. Die Erfindung ist aber nicht auf Wäschesäcke 10 beschränkt. Die Wäschestücke 13 können auch in anderen Transportbehältern, wie beispielsweise Wäschecontainern 11 (Fig. 7), transportiert werden. Schließlich ist es auch denkbar, einen Stapel 12 (Fig. 8) mehrerer gefalteter Wäschestücke 13 mit der Vorrichtung in einer Wäscherei weiterzutransportieren.

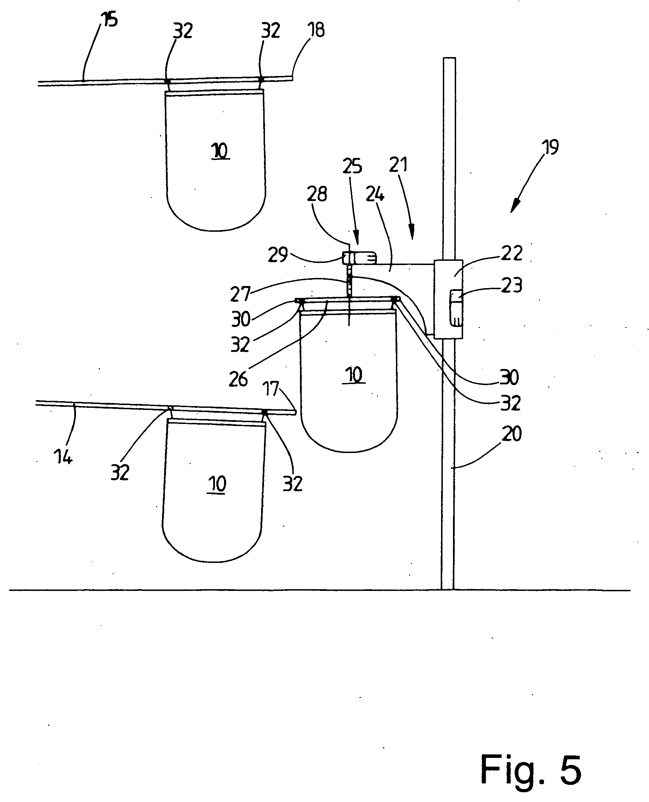

Die Fig. 1 zeigt einen Teil eines einfachen Schienensystems mit zwei Schienen 14 und 15. Die Schienen 14 und 15 verfügen - wie die Schienen der nachfolgend näher beschriebenen Vorrichtungen - über einen gleichen Querschnitt. Dazu sind die Schienen 14 und 15 so ausgebildet, dass an ihnen oder in ihnen Laufwagen 16 (vgl. insbesondere Fig. 5) frei verfahrbar sind. Der Verfahrweg der Laufwagen 16 wird von den Schienen 14 und 15 vorgegeben, indem die Laufwagen 16 in Längsrichtung der Schienen 14, 15 entlangfahren können. Die Schienen 14 und 15 können beliebige Verläufe aufweisen. Dazu sind die Verläufe der Schienen 14, 15 an den Weg bzw. die Bahn angepasst, längs derer die Laufwagen 16 mit den Wäschesäcken 10, den Wäschecontainem 11 oder den Stapeln 12 in der Wäscherei weitertransportiert werden sollen. Die Schienen 14 und 15 brauchen also nicht - wie idealisiert in der Fig. 1 dargestellt - gerade Verläufe aufzuweisen.

Die zueinandergerichteten Enden 17 und 18 der Schienen 14 und 15 sind voneinander beabstandet. Weil im gezeigten Ausführungsbeispiel der Fig. 1 die Schienen 14 und 15 auf einer gemeinsamen geraden Linie sich befinden, liegen hier die Enden 17 und 18 einander gegenüber.

Zwischen den Schienen 14 und 15 ist eine Hubeinrichtung 19 angeordnet. Die Hubeinrichtung 19 weist eine senkrechte Hubsäule 20 und einen Ausleger 21 auf. Der Ausleger 21 weist eine Führungseinheit 22 auf, womit er unverdrehbar an der Hubsäule 20 auf- und abbewegbar ist. Ein der Führungseinheit 22 zugeordneter Antrieb, beispielsweise ein Elektromotor 23, fährt den Ausleger 21 an der Hubsäule 20 auf- und ab. Durch eine entsprechende Sensorik kann der Elektromotor 23 gezielt gesteuert werden, um den Ausleger 21 um einen bestimmten Weg zu verfahren, wodurch der Ausleger 21 gezielt Positionen längs der Hubsäule 20 anfahren kann. Der Ausleger 21 weist des Weiteren einen mit der Führungseinheit 22 verbundenen Kragarm 24 auf, dessen freier Endbereich 25 seitlich gegenüber der Hubsäule 20 absteht, und zwar im gezeigten Ausführungsbeispiel etwa senkrecht zur Längsachse der vertikalen Hubsäule 20. Diese Ausgestaltung der Hubeinrichtung 19 gilt auch für alle nachfolgenden Ausführungsbeispiele.

Der Ausleger 21 weist an einem freien Endbereich 25 ein Tragmittel auf. Bei den Ausführungsbeispielen der Fig. 5 handelt es sich beim Tragmittel um einen Schienenabschnitt 26. Der im gezeigten Ausführungsbeispiel gerade, aber gegebenenfalls auch gebogene Schienenabschnitt 26 ist so gestaltet wie die Schienen 14 und 15, weist insbesondere einen gleichen Querschnitt auf. Der Schienenabschnitt 26 ist horizontal oder vorzugsweise leicht geneigt mittig unter dem freien Endbereich 25 des Kragarms 24 angehängt durch einen senkrechten Wellenstummel 27. Der Wellenstummel 27 und mit ihm der Schienenabschnitt 26 sind gegenüber dem freien Endbereich 25 des Kragarms 24 um eine senkrechte Drehachse 28 drehbar. Zum Verdrehen des Schienenabschnitts 26 um die Drehachse 28 ist ein Drehantrieb am Kragarm 24 angeordnet, bei dem es sich im gezeigten Ausführungsbeispiel um einen Elektromotor 29 handelt. Der Elektromotor 29 ist so steuerbar bzw. regelbar, dass er den Schienenabschnitt 26 gezielt um die Drehachse 28 verdreht.

Beim Verdrehen um die Drehachse 28 beschreiben die gegenüberliegenden Enden 30 des Schienenabschnitts 26 eine punkt-strich-liniert in den Fig. 1 bis 3 angedeutete Kreisbahn 31. Durch die mittige Befestigung des Wellenstummels 27 oberhalb des Schienenabschnitts 26 sind beide Enden 30 gleichermaßen um die halbe Länge des Schienenabschnitts 26 von der Drehachse 28 entfernt, so dass diese beim Verdrehen des Schienenabschnitts 26 sich gleichermaßen auf der gemeinsamen Kreisbahn 31 entlangbewegen.

Die zuvor beschriebene Hubeinrichtung dient zum Auf- und Abbewegen sowie erfindungsgemäß auch zum Drehen des Wäschesacks 10. Auch wenn nur von der "Hubeinrichtung 19" gesprochen wird, ist es tatsächlich eine Hub- und Dreheinrichtung.

Beim Ausführungsbeispiel der Fig. 5 mit dem als Schienenabschnitt 26 ausgebildeten Tragmittel am Ausleger 21 der Hubeinrichtung 19 ist der Wäschesack 10 mit zwei seinen gegenüberliegenden Randbereichen zugeordneten Laufwagen 32 am oder im Schienenabschnitt 26 verfahrbar. Dazu verfügt der Schienenabschnitt 26 über eine Länge, die mindestens der Breite des Wäschesacks 10 entspricht, so dass sich die Laufwagen 32 mit geringem Abstand vor gegenüberliegenden Enden 30 des Schienenabschnitts 26 befinden, wenn dem Schienenabschnitt 26 ein Wäschesack 10 zugeordnet ist. Die Laufwagen 32 sind im Schienenabschnitt 26 frei verfahrbar. Es sind aber Mittel denkbar, die die Laufwagen 32 an mindestens einem Endbereich des Schienenabschnitts 26 fixieren bzw. bremsen, damit beim Verdrehen des Schienenabschnitts 26 um die Drehachse 28 die Laufwagen 32 nicht über die freien Enden 30 ungewollt aus den Schienenabschnitten 26 herauslaufen. Denkbar ist es vor allem bei einem horizontalen Schienenabschnitt 26, im Bereich des Schienenabschnitts 26 die an sich keinen Antrieb aufweisenden Laufwagen 32 durch einen externen Antrieb, im einfachsten Falle einen Schieber, längs des Schienenabschnitts 26 weiterzubewegen. Der Antrieb dient dazu, die Laufwagen 32 mit dem daran hängenden Wäschesack 10 aus dem Schienenabschnitt 26 herauszuschieben auf eine zum Abtransport des Wäschesacks 10 dienende abwärts geneigte Schiene 15.

Alternativ ist es auch denkbar, den Wäschesack 10 mit dem diesen tragenden Laufwagen 32 aus dem Schienenabschnitt 26 herauszubewegen durch eine leichte Schrägstellung des Schienenabschnitts 26 in Richtung der sich daran anschließenden Schiene 15. Dann ist der Schienenabschnitt 26 leicht geneigt unter der horizontalen Drehachse 28 angeordnet oder die Drehachse 28 mit dem Schienenabschnitt 26 geneigt. Die Neigung des Schienenabschnitts 26 entspricht bevorzugt der Neigung der Schiene 14 bzw. 15. Es kann dann der Wäschesack 10 mit seinem Laufwagen 32 von der zum Schienenabschnitt 26 abwärts geneigten Schiene 14 übergangslos auf den Schienenabschnitt 26 fahren, und zwar selbsttätig. Mindestens ein nicht gezeigter Stopper am Schienenabschnitt 26 sorgt dafür, dass der Wäschesack 10 mit dem Laufwagen 32 nach dem vollständigen Einfahren in den Schienenabschnitt 26 abgebremst wird. Vorzugsweise wird durch nicht gezeigte Stopper der Wäschesack 10 mit dem Laufwagen 32 auch im Schienenabschnitt 26 arretiert. Durch ein erforderlichenfalls erfolgendes Umorientieren des Wäschesacks 10 mit dem Schienenabschnitt 26, nämlich Drehen um die Drehachse 28, wird die Neigung des Schienenabschnitts 26 geändert, so dass diese etwa der Neigung der von der Hubeinrichtung 19 abzweigenden, abwärts gerichteten Schiene 15 entspricht. Dadurch kann nach Lösen des Stoppers der Wäschesack 10 mit dem Laufwagen 32 selbsttätig vom Schienenabschnitt 26 auf die Schiene 15 laufen (Fig. 5).

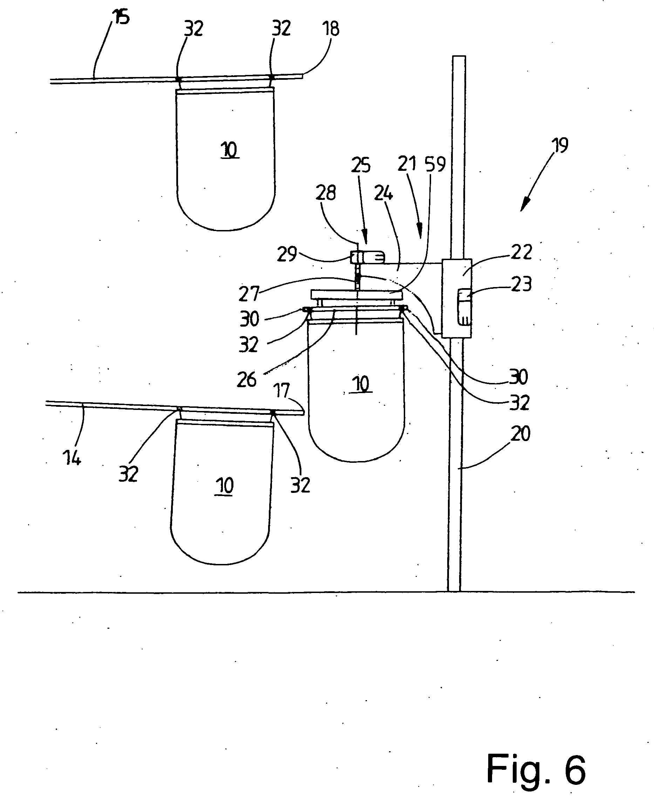

Die Fig. 6 zeigt ein alternatives Ausführungsbeispiel der Hubeinrichtung 19 der Fig. 5. Die Hubeinrichtung 19 unterscheidet sich von derjenigen der Fig. 5 nur dadurch, dass der Schienenabschnitt 26 nicht direkt unter der Drehachse 27 befestigt ist, sondern an einem waagerechten Träger 59 hängt. Der waagerechte Träger 59 ist fest, nämlich unverdrehbar, mit dem unteren Ende des senkrechten Wellenstummels 27 verbunden. Durch entsprechende Halterungen ist der Schienenabschnitt 26 unter dem Träger 59 befestigt. Im Ausführungsbeispiel der Fig. 6 ist der Schienenabschnitt 26 derart unter dem Träger 59 befestigt, dass der Schienenabschnitt 26 sich schräg bzw. geneigt unter dem horizontalen Träger 59 befindet.

Die Fig. 1 bis 4 zeigen beispielhaft die Zuordnung der Hubeinrichtung 19 zu mehreren Schienen 14, 15 und/oder zu einem Schienensystem 33 aus mehreren Schienen 34, 35, 36.

Beim Ausführungsbeispiel der Fig. 1 ist die Hubeinrichtung 19 zwischen zwei Schienen 14 und 15 angeordnet, deren Enden 17, 18 einander gegenüberliegen. Um eine Schwerkraftförderung der Wäschesäcke 10 längs der Schienen 14 und 15 zu ermöglichen, liegen die gegenüberliegenden Enden 17, 18 der Schienen 14 und 15 auf unterschiedlichen Höhenniveaus. Beispielsweise liegt das Ende 17 der Schiene 14 niedriger als das Ende 18 der Schiene 15. Von der zur Hubeinrichtung 19 leicht abwärts geneigt verlaufenden Schiene 14 fahren die Laufwagen 32 mit einem daran hängenden Wäschesack 10 selbsttätig in den vor das Ende 17 der Schiene 14 gefahrenen Schienenabschnitt 26 ein. Vorzugsweise wird dann mindestens ein Laufwagen 32 auf dem Schienenabschnitt 26 fixiert, so dass beide Laufwagen 32 nicht ungewollt den Schienenabschnitt 26 verlassen können. Nunmehr wird von der Hubeinrichtung 19 der Schienenabschnitt 26 mit dem Wäschesack 10 angehoben auf das Niveau der höheren Schiene 15. Wenn sich dabei das zur Schiene 15 weisende Ende 30 vor dem Ende 18 der Schiene 15 befindet, wird der Wäschesack 10 mit den Laufwagen 32 aus dem Schienenabschnitt 26 herausbewegt, wonach der Wäschesack 10 mit den Laufwagen 32 längs der von der Hubeinrichtung 19 leicht abwärtsgerichteten Schiene 15 selbsttätig entlang der Schiene 15 weiterfährt. Beim Ausführungsbeispiel der Fig. 1 mit gegenüberliegenden Enden 17 und 18 der Schienen 14 und 15 braucht der Wäschesack 10 von der Hubeinrichtung 19 nur angehoben zu werden. Eine Umorientierung des Schienenabschnitts 26 ist nicht erforderlich, und zwar auch dann nicht, wenn der Schienenabschnitt 26 leicht geneigt ist. Wenn der Schienenabschnitt 26 beim Übergeben des Wäschesacks 10 zur nachfolgenden Schiene 15 in Richtung desselben geneigt ist, läuft der Wäschesack 10 mit den Laufwagen 32 nach dem Lösen der Arretierung des mindestens einen Laufwagens 32 selbsttätig aus dem Schienenabschnitt 26 heraus auf die Schiene 15.

Das Ausführungsbeispiel der Fig. 2 unterscheidet sich von demjenigen der Fig. 1 dadurch, dass die Schienen 14 und 15 rechwinklig zueinander verlaufen. In diesem Falle dient die Hubeinrichtung 19 dazu, den Wäschesack 10 mit den diese tragenden Laufwagen 32 anzuheben und den Wäschesack 10 umzuorientieren durch ein Verdrehen des Schienenabschnitts 26 um 90°. Dieses Verdrehen kann beim horizontalen Schienenabschnitt 26 in beliebigen Richtungen erfolgen, je nachdem, ob der erste Laufwagen 32 als erstes an die Schiene 15 zu übergeben ist oder der letzte Laufwagen 32 voran auf die Schiene 15 gelangen soll.

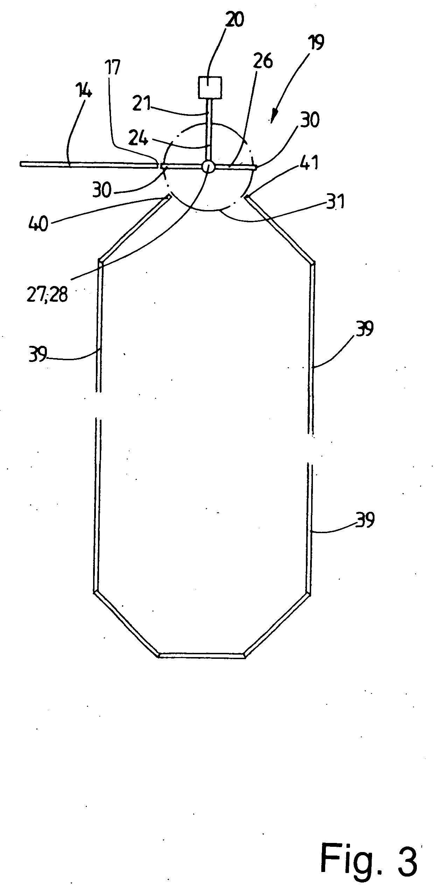

Die Fig. 3 zeigt ein Ausführungsbeispiel der Erfindung mit einer einzigen Schiene 39 und einer einzigen Hubeinrichtung 19. Der Verlauf der Schiene 39 kann beliebig sein. Die Schiene 39 zweigt mit einem höherliegenden Ende 40 von der Hubeinrichtung 19 ab. Mit einem tieferliegenden Ende 41 ist die Schiene 39 wieder zur Hubeinrichtung 19 zurückgeführt. Die Schiene 39 und die Hubeinrichtung 19 bilden zusammen einen Kreislauf. Dazu sind die Wäschesäcke 10 in ihren Laufwagen 32 nach dem Prinzip eines Schwerkraftförderers ohne Antrieb frei verfahrbar vom höheren Ende 40 zum tieferliegenden Ende 41. Die Hubeinrichtung 19 schließt den Kreislauf, indem sie die am unteren Ende 41 ankommenden Wäschesäcke 10 wieder anhebt zum höherliegenden Ende 40 der Schiene 39, um so den Wäschesäcken 10 wieder potentielle Energie zu verleihen. Die Enden 40 und 41 der Schiene 39 münden an der gedachten Kreisbahn 31, auf der die Enden 30 des Schienenabschnitts 26 beim Drehen desselben um die vertikale Drehachse 28 entlangbewegbar sind. Auf diese Weise ist durch entsprechendes Drehen des Schienenabschnitts 26 das jeweilige Ende 30 desselben vor das gewünschte Ende 40 oder 41 der Schiene 39 bringbar, um einen Schienenabschnitt 26 mit einem daran hängenden Wäschesack 10 von der Schiene 39 zu übernehmen und an einer höheren Stelle wieder in die Schiene 39 einzuschleusen.

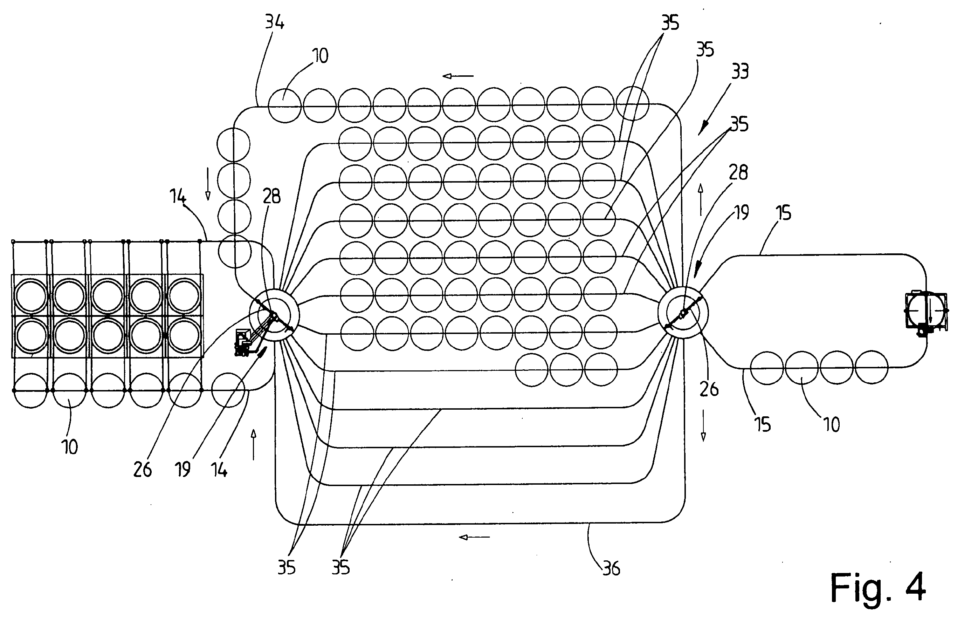

Beim Ausführungsbeispiel der Fig. 4 ist auf gegenüberliegenden Endbereichen des Schienensystems 33 jeweils eine bevorzugt gleich ausgebildete Hubeinrichtung 19 vorgesehen. Die in Bezug auf die Darstellung der Fig. 4 linke Hubeinrichtung 19 dient dazu, ankommende Wäschesäcke 10 in das Schienensystem 33 einzuschleusen und gegebenenfalls Wäschesäcke 10 im Schienensystem 33 im Kreislauf fahren zu lassen. Die in Bezug auf die Darstellung in der Fig. 4 rechte Hubeinrichtung 19 dient dazu, Wäschesäcke 10 sortiert aus dem Schienensystem 33 auszuschleusen oder Wäschesäcke 10 im Kreislauf zurück zur Hubeinrichtung 19 am Anfang des Schienensystems 33 zu bringen. Dabei dienen die beiden Hubeinrichtungen 19 quasi als Drehscheiben zum Verteilen der Wäschesäcke 10 mit dem diese tragenden Laufwagen 32 auf unterschiedliche Schienen des Schienensystems 33 sowie zum Einschleusen zu sortierender Wäschesäcke 10 in das Schienensystem und zum Ausschleusen sortierter Wäschesäcke 10 aus dem Schienensystem 33.

Das in der Fig. 4 gezeigte Schienensystem 33 verfügt über zehn als Speicherstrecken dienende Schienen 35, die im mittleren Bereich parallel zueinander verlaufen, und zwei als Rücklaufbahnen dienende Schienen 34 und 36 auf der einen und der anderen Seite der Schienen 35. Die beiden Schienen 34 und 36 zur Bildung von Rücklaufbahnen stellen zusammen mit den beiden Hubeinrichtungen 19 einen geschlossenen Kreislauf um die zehn dazwischenliegenden Schienen 35 dar. Die Erfindung ist nicht auf zehn im Wesentlichen parallel zueinander verlaufende Schienen 35 zur Bildung von Speicherstrecken beschränkt. Die Anzahl der Schienen 35 kann größer oder kleiner sein. Auch sind die Länge und der Verlauf der Schienen nicht auf das Ausführungsbeispiel der Fig. 4 beschränkt.

Die als Speicher dienenden Schienen 35 nehmen Reihen mit jeweils mehreren Wäschesäcken 10 mit darin enthaltenen bestimmten Wäschestücken auf. Die im gezeigten Ausführungsbeispiel zehn Schienen 35 dienen dazu, die Wäschesäcke 10 mit den darin befindlichen Wäschestücken beispielsweise nach ihrer Art und/oder der zu erfolgenden Behandlung zu sortieren, ohne dass dazu die Wäschesäcke 10 nach Wäschestücken sortiert in die jeweiligen Schienen 35 eingeschleust werden müssen. Es können die Wäschesäcke 10 von der (linken) Hubeinrichtung 19 am Anfang des Schienensystems 33 beliebig in die Schienen 35 eingeschleust werden, bevorzugt in eine solche Schiene 35, die Platz dazu bietet. Die Wäschesäcke 10 mit den gewünschten Sortierkriterien der Wäschestücke werden von der hinteren (rechten) Hubeinrichtung 19 sortiert aus dem Schienensystem 33 ausgeschleust.

Die Sortierung erfolgt in einer solchen Weise, dass vor der hinteren Hubeinrichtung 19 Wäschesäcke 10 mit Wäsche, die das gewünschte Sortierkriterium nicht erfüllt, über eine der zur Rückförderung dienende Schienen 34 oder 36 zurückgeleitet werden zur Hubeinrichtung 19 am Anfang des Schienensystems 33. Von der Hubeinrichtung 19 werden die auf einem tieferen Niveau auf der Schiene 34 oder 36 herangeführten Wäschesäcke 10 angehoben und durch Verdrehen des Schienenabschnitts 26 so umorientiert, dass sie gezielt in eine der höherliegenden Schienen 35 einfahrbar sind. Auf diese Weise werden Wäschesäcke 10 mit Wäsche, die noch nicht "an der Reihe ist", an den Anfang des Schienensystems 33 zurücktransportiert, also hinter die jeweilige Reihe aus mehreren Wäschestücken 10 "eingereiht", oder gegebenenfalls auf eine andere zur Speicherung dienende Schiene 35 gefahren. Immer dann, wenn ein Wäschesack 10 mit das Sortierkriterium erfüllenden Wäschestücken am Ende einer Schiene 35, also vorn in der Reihe mehrerer Wäschesäcke 10, vor der hinteren Hubeinrichtung 19 sich befindet, wird von dieser Hubeinrichtung 19 der Wäschesack 10 aus dem Schienensystem 33 ausgeschleust und dabei einer nachfolgenden Behandlung zugeführt.

Infolge zweier zur Rückförderung dienender Schienen 34 und 36 ist es möglich, eine Schiene 34 oder 36 zum Zurücktransportieren noch voller Wäschesäcke 10 zu verwenden, während auf der anderen Schiene 34 oder 36 im Bereich der Behandlung der Wäschestücke entladene leere Wäschesäcke 10 zurücktransportierbar sind zur Beladestelle vor dem Schienensystem 33. Auch die leeren Wäschesäcke 10 werden beim Zurücktransportieren entlang der Schienen 34 oder 36 von den Hubeinrichtungen 19 in die entsprechende als Rückführbahn dienende Schiene 34 oder 36 ein- und ausgeschleust.

Während des Anhebens oder nach dem Anheben des Wäschesacks 10 wird der Schienenabschnitt 26 um die vertikale Drehachse 28 unter dem Ausleger 21 der Hubeinrichtung 19 verdreht, und zwar um einen solchen Winkel, dass der Wäschesack 10 auf den Anfang 37 der vorgesehenen Schiene 34, 35 oder 36 übergebbar ist. Der Elektromotor 29 zum Drehen des Schienenabschnitts 26 wird entsprechend gesteuert, vorzugsweise schrittweise. Wenn es nicht darauf ankommt, ob der vordere oder der hintere Laufwagen 32 zuerst an die jeweilige Schiene 34, 35 oder 36 übergebbar ist, wird der Schienenabschnitt 26 zweckmäßigerweise in eine solche Richtung verdreht, dass mit einem geringsten Verdrehwinkel die Laufwagen 32 mit dem darunter hängenden Wäschesack 10 vom Schienenabschnitt 26 der Hubeinrichtung 19 auf die vorgesehene Schiene 34, 35 oder 36 gelangen. Die Wäschesäcke 10 fahren entlang der Schienen 34, 35 bzw. 36 vorzugsweise durch Schwerkraft. Es ist bevorzugt vorgesehen, an mindestens einer Stelle am tieferliegenden hinteren Ende jeder Schiene 34, 35, 36 einen Stopper vorzusehen, der den Wäschesack 10 mit der darin befindlichen Wäsche abstoppt.

Die Erfindung ist nicht auf das in der Fig. 4 gezeigte Schienensystem 33 beschränkt. Vielmehr kann das Schienensystem eine beliebige Anzahl von Schienen aufweisen. Die Schienen können auch über beliebige Verläufe verfügen. Denkbar ist es auch, dass die Schienen ganz oder teilweise horizontal verlaufen und im Bereich dieser horizontalen Bereiche der Schienen die Laufwagen 32 mit daran hängenden vollen oder leeren Wäschesäcken 10 durch Antriebe weiterbewegt werden.

Das erfindungsgemäße Verfahren ermöglicht die Schwerkraftförderung der Wäschesäcke 10 im Kreislauf, und zwar auch mehrere aufeinanderfolgende Kreisläufe. Dabei kann zum Beispiel ein Sortieren der in den Wäschesäcken 10 enthaltenen Wäschestücke erfolgen. Üblicherweise mehrere sich im Kreislauf befindliche Wäschesäcke 10 werden so lange im Kreislauf bewegt, bis der betreffende Wäschesack 10 mit Wäschestücken, die ein bestimmtes Kriterium erfüllen, aus dem Wäschesack 10 entladen werden kann oder gegebenenfalls auch der Wäschesack 10 mit den Wäschestücken und gegebenenfalls auch den Laufwagen 32 an einer geeigneten Stelle durch beispielsweise nicht gezeigte Weichen aus der Schiene 39 herausbewegt wird. Die Wäschesäcke 10 werden solange im Kreislauf längs der Schienen und durch die Hubeinrichtungen 19 bewegt, bis alle Wäschesäcke 10 mit das gleiche Kriterium erfüllenden Wäschestücken aus dem Kreislauf ausgeschleust oder entladen sind.

Abweichend von den zuvor beschriebenen Ausführungsbeispielen, bei denen Wäschesäcke 10 an den Laufwagen 32 hängen, können auch Wäschecontainer 11 oder einzelne Wäschestücke 13 an zwei Laufwagen 32 oder nur einem Laufwagen 32 angehängt sein. Die zuvor beschriebenen erfindungsgemäße Verfahren laufen damit genauso ab wie mit Wäschesäcken 10.

Die Fig. 7 zeigt ein Ausführungsbeispiel der Erfindung, bei der die Hubeinrichtung 42 gegenüber der Hubeinrichtung 19 verändert ist. Die Hubeinrichtung 42 verfügt über ein Tragmittel, das nicht als Schienenabschnitt 26 ausgebildet ist, sondern als ein Aufhängehaken 43 für einen Wäschecontainer 11. Im Übrigen entspricht die Hubeinrichtung 42 der Hubeinrichtung 19, weswegen für gleiche Teile gleiche Bezugsziffern verwendet werden.

Der Aufhängehaken 43 ist auch drehbar am Kragarm 24 angeordnet. Dazu ist der freie Endbereich 25 des Kragarms 24 auch mit einem Elektromotor 23 versehen, um den Wellenstummel 27 um die vertikale Drehachse 28 zu verdrehen. An der Unterseite des Wellenstummels 27 ist der Aufhängehaken 43 befestigt. Der im Querschnitt etwa C-förmig ausgebildete Aufhängehaken 43 weist einen oben offenen, senkrechten Hakenabschnitt 44 auf, auf den von oben eine Tasche 45 an der Rückseite des Wäschecontainers 11 aufhängbar ist. Dadurch kann ein Wäschecontainer 10 lösbar mit dem Aufhängehaken 43 der Hubeinrichtung 42 verbunden werden. Durch eine entsprechende Aufwärtsbewegung der Führungseinheit 22 an der Hubsäule 20 der Hubeinrichtung 42 kann der Hakenabschnitt 44 des Aufhängehakens 43 lösbar in Eingriff mit der Tasche 45 gebracht werden. Ebenso kann der Hakenabschnitt 44 aus der Tasche 45 nach unten herausgezogen werden zum Lösen des Wäschecontainers 11 vom Aufhängehaken 43 der Hubeinrichtung 42.

Der Weitertransport des Wäschecontainers 11 kann durch in der Fig. 7 nicht gezeigte Förderer, beispielsweise ein Förderband oder einen Rollenförderer, erfolgen. Durch das Verdrehen des Aufhängehakens 43 um die senkrechte Drehachse 28 kann der Wäschecontainer 11 am freien Ende des Auslegers 21 der Hubeinrichtung 42 verdreht werden, um auf verschiedene, unterschiedlich gerichtete Förderer abgesetzt oder von diesen aufgenommen zu werden.

Eine weitere Besonderheit der Hubeinrichtung 42 der Fig. 7 besteht darin, dass sie als Ganzes verfahrbar ist. Dazu befindet sich am unteren Ende der Hubsäule 20 ein Fahrwerk 46. Beim gezeigten Ausführungsbeispiel ist das Fahrwerk 46 spurgebunden, nämlich in bzw. an mindestens einer Schiene 47 verfahrbar. Die mindestens eine Schiene 47 kann einen beliebigen Verlauf aufweisen. Im gezeigten Ausführungsbeispiel ist die Schiene 47 gerade ausgebildet mit einem horizontalen Verlauf. Das Verfahren der Hubeinrichtung 42 längs der Schiene 47 erfolgt bevorzugt durch einen nicht gezeigten Antrieb mindestens eines Rades 48 des Fahrwerks 46. Wie die Hubeinrichtung 42 kann auch die Hubeinrichtung 19 verfahrbar sein.

Die Fig. 8 zeigt ein Ausführungsbeispiel der Erfindung, bei der die Hubeinrichtung 49 zum Heben, Senken und Umorientieren eines Stapels 12 mehrerer gefalteter Wäschestücke 13 ausgebildet ist. Diese Hubeinrichtung 49 verfügt über einen kurzen Gurtförderer 50, der über eine Aufhängung 51 mit einem unteren Ende des um eine senkrechte Drehachse 28 drehbaren Wellenstummels 27 verbunden ist. Im Übrigen entspricht die Hubeinrichtung 29 den Hubeinrichtungen 19 bzw. 42, weswegen für gleiche Teile gleiche Bezugsziffern verwendet werden. Die Aufhängung 51 positioniert den Gurtförderer 50 etwa mittig unter der vertikalen Drehachse 28 des Wellenstummels 27. Durch Verdrehen des Wellenstummels 27 ist der Gurtförderer 50 mit dem sich darauf befindlichen Stapel 12 gefalteter Wäschestücke 13 um die vertikale Drehachse 28 verdrehbar. Diese Drehachse 28 verläuft bei einer bevorzugten Ausgestaltung der Hubeinrichtung 49 senkrecht durch die horizontale Ebene des Obertrums 52 des Gurtförderers 50, und zwar insbesondere etwa mittig. Der Gurtförderer 50 mit dem darauf sich befindenden Stapel 12 mehrerer gefalteter Wäschestücke 13 kann um die Drehachse 28 beliebig verdreht werden, und zwar auch um ganze Vollkreisdrehungen.

In der Fig. 8 sind zwei übereinanderliegende längere Gurtförderer 53, 54 gezeigt. Ein zur Hubeinrichtung 49 weisendes Ende 55 jedes Gurtförderers 53, 54 endet kurz vor einem zum Gurtförderer 53 bzw. 54 weisenden Ende 57 des Gurtförderers 50 der Hubeinrichtung. Wenn (wie in der Fig. 8 gezeigt) der Gurtförderer 50 von der Hubeinrichtung 49 heruntergefahren ist zum Übergeben eines Stapels 12 an den Gurtförderer 54 oder zum Übernehmen eines Stapels 12 vom Gurtförderer 54, liegen das Obertrum 52 des Gurtförderers 50 und ein Obertrum 58 des Gurtförderers 54 etwa in einer horizontalen Ebene, so dass im Wesentlichen übergangslos vom Gurtförderer 50 der Stapel 12 auf den Gurtförderer 54 laufen kann und umgekehrt. Wird der Gurtförderer 50 von der Hubeinrichtung 49 hochgefahren, so dass er vor dem Ende 56 des Gurtförderers 53 liegt, ist an den oberen Gurtförderer 53 ein Stapel 12 übergebbar oder von dem übernehmbar. Die Gurtförderer 53 und 54 müssen nicht deckungsgleich übereinanderliegen, sie können auch so zueinander angeordnet sein, dass ihre Förderrichtungen unter einem Winkel zueinander verlaufen. Dieser Winkelversatz der Gurtförderer 53, 54 wird ausgeglichen durch ein entsprechendes Verdrehen des Gurtförderers 50 der Hubeinrichtung 49 um die vertikale Drehachse 28. Bevorzugt ist die Hubsäule 20 der Hubeinrichtung 49 ortsfest installiert. Denkbar ist es aber auch, die Hubeinrichtung 49 wie die Hubeinrichtung 42 verfahrbar auszubilden, nämlich mit einem Fahrwerk 46 zu versehen.

Bei den Hubeinrichtungen 19, 42, 49 aller zuvor beschriebenen Ausführungsbeispiele befindet sich die Drehachse 28 für das Tragmittel am freien Endbereich 25 des Auslegers 21. Alternativ oder zusätzlich kann der Ausleger 21 aber auch um die Hubsäule 20 drehbar sein. Die Längsachse der Hubsäule 20 bildet dann eine alternative oder zusätzliche Drehachse für den Ausleger.

**Bezugszeichenliste:**

| | | | |
|---|---|---|---|
| 10 | Wäschesack | 37 | Anfang |
| 11 | Wäschecontainer | 38 | Ende |
| 12 | Stapel | 39 | Schiene |
| 13 | Wäschestück | 40 | Ende |
| 14 | Schiene | 41 | Ende |
| 15 | Schiene | 42 | Hubeinrichtung |
| 17 | Ende | 43 | Aufhängehaken |
| 18 | Ende | 44 | Hakenabschnitt |
| 19 | Hubeinrichtung | 45 | Tasche |
| 20 | Hubsäule | 46 | Fahrwerk |
| 21 | Ausleger | 47 | Schiene |
| 22 | Führungseinheit | 48 | Rad |
| 23 | Elektromotor | 49 | Hubeinrichtung |
| 24 | Kragarm | 50 | Gurtförderer |
| 25 | freier Endbereich | 51 | Aufhängung |
| 26 | Schienenabschnitt | 52 | Obertrum |
| 27 | Wellenstummel | 53 | Gurtförderer |
| 28 | Drehachse | 54 | Gurtförderer |
| 29 | Elektromotor | 55 | Ende |
| 30 | Ende | 56 | Ende |
| 31 | Kreisbahn | 57 | Ende |
| 32 | Laufwagen | 58 | Obertrum |
| 33 | Schienensystem | 59 | Träger |
| 34 | Schiene | 60 | |
| 35 | Schiene | 61 | |
| 36 | Schiene | | |

## Patentansprüche

1. Verfahren zum Transport von Wäschestücken (13), insbesondere mehreren in Transportbehältern oder Stapeln (12) befindlichen Wäschestücken (13), wobei die Wäschestücke (13) an mindestens einer geneigten Schiene durch Schwerkraft verfahren werden, **dadurch gekennzeichnet, dass** längs der mindestens einen geneigten Schiene die Wäschestücke (13) im Kreislauf durch Schwerkraft transportiert werden, wobei die Wäschestücke (13) von einer Hubeinrichtung (19, 42, 49) vom tieferen Ende des Kreislaufs zu einem höheren Anfang des Kreislaufs angehoben und von der mindestens einen Hubeinrichtung (19, 42, 49) durch Drehen um eine vertikale oder leicht geneigte Achse umorientiert werden.

2. Verfahren nach Anspruch 1, **dadurch gekennzeichnet, dass** von der Hubeinrichtung (19, 42, 49) die Wäschestücke (13) umorientiert werden vom tieferen Ende des Kreislaufs zum in der Richtung von diesem abweichenden höheren Ende des Kreislaufs, wobei vorzugsweise die Wäschestücke (13) durch Schwerkraft in die Hubeinrichtung (19, 42, 49) eingefahren und nach dem Anheben durch Schwerkraft und/oder durch einen Antrieb aus der Hubeinrichtung (19, 42, 49) ausgefahren werden.

3. Vorrichtung zum Transport von Wäschestücken (13), insbesondere mehreren in Wäschebehältern oder Stapeln (12) befindlichen Wäschestücken (13), mit vorzugsweise mehreren Schienen, an denen die Wäschestücke vorzugsweise mit Laufwagen (32) verfahrbar sind und mit mindestens einer Hubeinrichtung (19, 42, 49) zum Auf- und Abbewegen der Wäschestücke (13), **dadurch gekennzeichnet, dass** die wenigstens eine Hubeinrichtung (19, 42, 49) auch zum Drehen der Wäschestücke (13) um eine vertikale oder leicht geneigte Achse ausgebildet ist und der mindestens einen Hubeinrichtung (19, 42, 49) die Enden mindestens einer Schiene eines Schienenkreislaufs zugeordnet sind, wobei die Enden in unterschiedlichen Höhen an die Hubeinrichtung (19, 42, 49) herangeführt sind.

4. Vorrichtung nach Anspruch 3, **dadurch gekennzeichnet, dass** einer Hubeinrichtung (19, 42, 49) mehrere Schienen zugeordnet sind, wobei bevorzugt die Enden aller der gleichen Hubeinrichtung (19, 42, 49) zugeordneten Schienen einen gleichen Abstand zu einer Drehachse (28) aufweisen, um die die Wäschestücke (13) drehbar sind.

5. Vorrichtung nach Anspruch 3, **dadurch gekennzeichnet, dass** die Hubeinrichtung (19, 42, 49) einen um die Drehachse (28) drehbaren Schienenabschnitt (26) aufweist und die Drehachse (28) den Schienenabschnitt (26) etwa auf einer halben Länge schneidet, vorzugsweise senkrecht.

6. Vorrichtung nach einem der Ansprüche 3 bis 5, **dadurch gekennzeichnet, dass** gegenüberliegende Enden (30) des Schienenabschnitts (26) der Hubeinrichtung (19, 42, 49) beim Drehen des Schienenabschnitts (26) um die mittige Drehachse (28) eine gedachte Kreisbahn (31) beschreiben, wobei die Enden (30) der der Hubeinrichtung (19, 42, 49) zugeordneten Schienen kurz vor dieser Kreisbahn (31) enden.

## Claims

1. Method of transporting items of laundry (13), in particular a plurality of items of laundry (13) located in laundry containers or stacks (12), wherein the items of laundry (13) are displaced on at least one inclined rail by gravitational force, **characterized in that**, along the at least one inclined rail, the items of laundry (13) are transported in circulatory fashion by gravitational force, wherein the items of laundry (13) are raised by a lifting arrangement (19, 42, 49) from the lower end of the circuit to a higher-level start of the circuit, and are reoriented by the at least one lifting arrangement (19, 42, 49) by rotation about an axis which is vertical or inclined slightly in relation to the vertical.

2. Method according to Claim 1, **characterized in that**, using the lifting arrangement (19, 42, 49), the items of laundry (13) are reoriented from the lower end of the circuit in relation to the higher end of the circuit, the higher end deviating from the lower end in terms of direction, wherein preferably the items of laundry (13) are introduced into the lifting arrangement (19, 42, 49) by gravitational force and, once raised, are removed from the lifting arrangement (19, 42, 49) by gravitational force and/or by a drive.

3. Apparatus for transporting items of laundry (13), in particular a plurality of items of laundry (13) located in laundry containers or stacks (12), having preferably a plurality of rails, on which the items of laundry can be displaced preferably by means of carriages (32), and having at least one lifting arrangement (19, 42, 49) for moving the items of laundry (13) up and down, **characterized in that** the at least one lifting arrangement (19, 42, 49) is also designed for rotating the items of laundry (13) about an axis which is vertical or inclined slightly in relation to the vertical, and the at least one lifting arrangement (19, 42, 49) is assigned the ends of at least one rail of a circulatory rail path, wherein the ends are guided up to the lifting arrangement (19, 42, 49) at different heights.

4. Apparatus according to Claim 3, **characterized in that** a lifting arrangement (19, 42, 49) is assigned a plurality of rails, wherein preferably the ends of all of the rails assigned to the same lifting arrangement (19, 42, 49) are spaced apart by the same distance from an axis of rotation (28) about which the items of laundry (13) can be rotated.

5. Apparatus according to Claim 3, **characterized in that** the lifting arrangement (19, 42, 49) has a rail portion (26), which can be rotated about the axis of rotation (28), and the axis of rotation (28) intersects the rail portion (26), preferably perpendicularly, approximately half way along its length.

6. Apparatus according to one of Claims 3 to 5, **characterized in that** opposite ends (30) of the rail portion (26) of the lifting arrangement (19, 42, 49) describe an imaginary circular path (31) as the rail portion (26) is rotating about the central axis of rotation (28), wherein the ends (30) of the rails assigned to the lifting arrangement (19, 42, 49) terminate just in front of this circular path (31).

## Revendications

1. Procédé pour le transport d'articles de linge (13), en particulier de plusieurs articles de linge (13) se trouvant dans des récipients de linge ou en piles (12), les articles de linge (13) étant déplacés sur au moins un rail incliné, **caractérisé en ce que** les articles de linge (13) sont transportés en circuit par la force de pesanteur le long de l'au moins un rail incliné, les articles de linge (13) étant soulevés par un dispositif de levage (19, 42, 49) depuis l'extrémité plus basse du circuit jusqu'à un début plus haut du circuit, et sont réorientés par l'au moins un dispositif de levage (19, 42, 49) par rotation autour d'un axe vertical ou légèrement incliné par rapport à la verticale.

2. Procédé selon la revendication 1, **caractérisé en ce que** les articles de linge (13) sont réorientés par le dispositif de levage (19, 42, 49) de l'extrémité plus basse du circuit jusqu'à l'extrémité du circuit plus haute dans la direction s'écartant de celle-ci, les articles de linge (13) étant introduits de préférence par la force de pesanteur dans le dispositif de levage (19, 42, 49) et étant ressortis après le levage par la force de pesanteur et/ou par un entraînement hors du dispositif de levage (19, 42, 49).

3. Dispositif pour le transport d'articles de linge (13), en particulier de plusieurs articles de linge (13) se trouvant dans des récipients de linge ou en piles (12), comprenant de préférence plusieurs rails sur lesquels les articles de linge peuvent être déplacés de préférence avec des chariots de roulement (32) et comprenant au moins un dispositif de levage (19, 42, 49), pour le déplacement de levage et d'abaissement des articles de linge (13), **caractérisé en ce que** l'au moins un dispositif de levage (19, 42, 49) est aussi réalisé pour faire tourner les articles de linge (13) autour d'un axe vertical au légèrement incliné par rapport à la verticale, et à l'au moins un dispositif de levage (19, 42, 49) sont associées les extrémités d'au moins un rail d'un circuit de rails, les extrémités étant rapprochées du dispositif de levage (19, 42, 49) à différentes hauteurs.

4. Dispositif selon la revendication 3, **caractérisé en ce qu'**un dispositif de levage (19, 42, 49) est associé à plusieurs rails, de préférence les extrémités de tous les rails associés au même dispositif de levage (19, 42, 49) présentant une même distance à un axe de rotation (28) autour duquel les articles de linge (13) peuvent tourner.

5. Dispositif selon la revendication 3, **caractérisé en ce que** le dispositif de levage (19, 42, 49) présente une portion de rail (26) pouvant tourner autour de l'axe de rotation (28) et l'axe de rotation (28) coupe la portion de rail (26) approximativement à une demi-longueur, de préférence verticalement.

6. Dispositif selon l'une quelconque des revendications 3 à 5, **caractérisé en ce que** des extrémités opposées (30) de la portion de rail (26) du dispositif de levage (19, 42, 49) décrivent une trajectoire circulaire imaginaire (31) lors de la rotation de la portion de rail (26) autour de l'axe de rotation médian (28), les extrémités (30) des rails associés au dispositif de levage (19, 42, 49) se terminant juste avant cette trajectoire circulaire (31).
